# EUROPEAN PATENT APPLICATION

(11) **EP 4 566 787 A2**
(43) Date of publication of application: **11.06.2025**
(21) Application number: 24212614.2
(22) Date of filing: 13.11.2024
(51) Int. Cl.: B29C 33/04, B29C 48/885, B29D 99/00, B60N 2/70, B29L 31/58, B29L 31/00, D04H 3/037, D04H 3/16

(54) **CUSHION, MANUFACTURING TOOL, AND A METHOD OF MANUFACTURE**

(30) Priority: 14.11.2023 US 202363598739 P; 01.11.2024 US 202418934839
(71) Applicant: Lear Corporation, Southfield, MI 48033 (US)
(72) Inventor: Hallock, Joshua, Warren, MI, 48088 (US); Hale, David, Northville, MI, 48168 (US)
(74) Representative: Grünecker Patent- und Rechtsanwälte PartG mbB

(57) **Abstract**

A cushion, a manufacturing tool, and a method of manufacture. The cushion comprises a filament mesh structure that comprises a set of filaments. The tool includes a funnel and a corresponding extension that are configured to shape and cool the filament mesh structure, respectively. The method includes forming the filament mesh structure via the tool.

## Description

### CROSS-REFERENCE TO RELATED APPLICATIONS

This application claims the benefit of U.S. provisional application Serial No. 63/598,739, filed November 14, 2023, the disclosure of which is hereby incorporated in its entirety by reference herein.

### TECHNICAL FIELD

This relates to a cushion comprising a filament mesh structure, a manufacturing tool, and a method of manufacture.

### BRIEF DESCRIPTION OF THE DRAWINGS

Figure 1 is a perspective view of an example of a seat assembly;
Figures 2A and 2B are a perspective front view and corresponding a magnified view, respectively, of an example of a cushion of the seat assembly that comprises a filament mesh structure;
Figure 3 is schematic view of an example of a manufacturing system for making the filament mesh structure;
Figure 4 is a perspective top view of a funnel and a corresponding extension for the manufacturing system for making the filament mesh structure, where the funnel is configured to form the shape of the filament mesh structure;
Figure 5 is a partial perspective view of the funnel and the extension illustrating a bolted connection between the funnel and the extension;
Figure 6 is a perspective top view of the extension;
Figure 7 is a cross-sectional view of the extension taken along line 7-7 in Figure 4;
Figures 8A and 8B are a perspective side view and a corresponding a magnified view, respectively, of the extension illustrating a porous aspect of the extension; and
Figure 9 is a flowchart of a method for forming the filament mesh structure.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

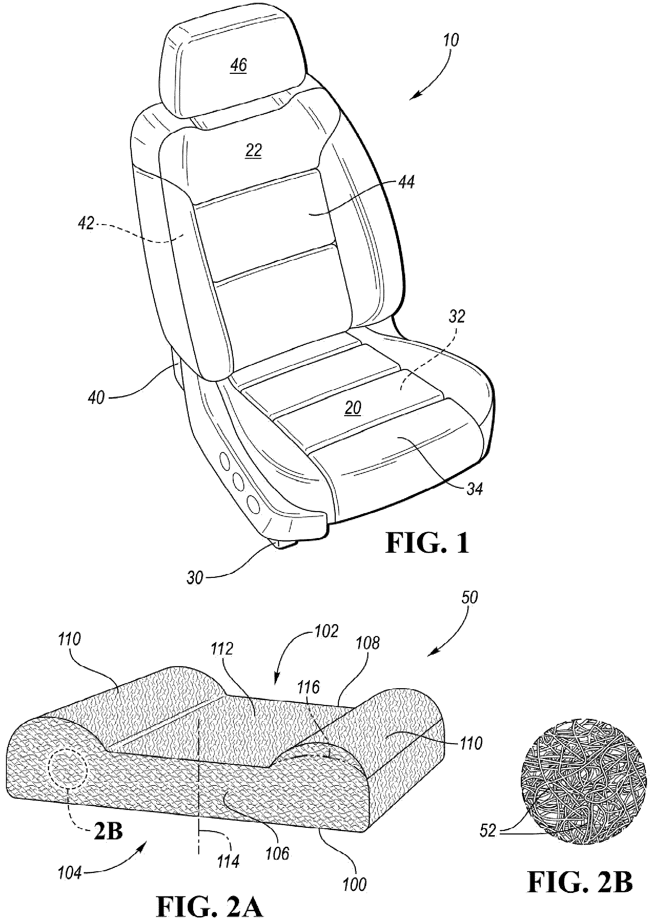

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats as shown, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

Referring to Figure 2, an example of a cushion 50 is shown. The cushion in generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a filament mesh structure but may also be referred to as a mesh cushion, mesh structure, or stranded mesh. In Figure 2, the cushion 50 is depicted as a non-foam component that does not include a foam component or foam material, such as urethane or polyurethane foam; however, it is contemplated that the cushion 50 may also include a foam component or foam material in addition to a non-foam component to provide additional cushioning or localized cushioning for a seat occupant. For example, foam material may be provided between the cushion 50 and a trim cover (e.g., trim cover 34, 44) that is disposed on the cushion 50, within the cushion 50, or combinations thereof. Reducing the amount of foam material that is provided with the cushion 50 or eliminating foam material from the cushion 50 reduces weight, may improve support and comfort of a seat occupant, and may improve recyclability.

The cushion 50 is described below in the context of a cushion 50 that does not include foam material. In this context, the cushion 50 is made of filaments 52 of polymeric material that are randomly looped, bent, curled, or entangled and are bonded together as will be discussed in more detail below. A filament 52 is directed bonded to another filament 52 rather than being indirectly bonded with a resin or other intermediate material.

The filaments 52, which may also be referred to as strands or threads, is made of any suitable material or materials. In some configurations, the filaments 52 are made of a thermoplastic material or thermoplastic material, such as a thermoplastic resin that is polyamide-based, polyester-based, polyimide-based, polyolefin-based, polypropylene-based, polystyrene-based, or combinations thereof. As one example, a polyethylene-based filament may be made of linear low density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure comprising a set of filaments 52 having openings or voids between the filaments 52.

The cushion 50 is a manufactured product that comprises a filament mesh structure or body comprising a set of the filaments 52. A cross cross-sectional contour 100 of the cushion comprises a first region 102 and a second region 104. The cross-sectional contour 100 may comprise the outer periphery of the cushion 50 taken along the front end 106 of the cushion 50, the back end 108 of the cushion 50, or any cross-section between the front end 106 and back end 108 of the cushion 50. Such a cross-section between the front end 106 and back end 108 of the cushion 50 may be substantially parallel to either the front end 106 or back end 108 of the cushion 50. Substantially parallel may refer to any range of values that is between exactly parallel and 20° or less from exactly parallel. For example, substantially parallel may refer to a value between 20° and exactly parallel, 15° and exactly parallel, 10° and exactly parallel, 5° and exactly parallel, 1° and exactly parallel, etc.

The first region 102 may be a top region or top surface of the cushion 50 while the second region 104 may be a bottom region or bottom surface of the cushion 50. The first region 102 may include a pair of spaced-apart protrusions 110. The spaced-apart protrusions 110 may comprise or form side bolsters of either a seat bottom 20 or a seat back 22. The spaced-apart protrusions 110 may extend from a centrally positioned region 112 within the first region 102. The centrally positioned region 112 may comprise a substantially flat or substantially planar region or surface. The second region 104 may also comprise a substantially flat or substantially planar region or surface.

Substantially flat or substantially planar may refer to a flat or planar surface that has no deviations from a perfectly flat plane or has deviations from the perfectly flat plane that are less than a tolerance of 10 millimeters (mm). For example, the centrally positioned region 112 may have an allowable tolerance of 10 mm or less, 5 mm or less, 2 mm or less, 1 mm or less, or 0.5 mm or less, 0.25 mm or less, etc. from a corresponding perfectly flat plane.

If the cushion 50 is utilized as cushion 32 of the seat bottom 20, the cushion 50 may be secured to the seat bottom frame 30 such that the spaced-apart protrusions 110 extend away or upward from the seat bottom frame 30. If the cushion 50 is utilized as cushion 42 of the seat back 22, the cushion 50 may be secured to the seat back frame 40 such that the spaced-apart protrusions 110 extend away or forward from the seat back frame 40. The cushion 50 may be symmetrical along central axis 114. For example, the front end 106 of the cushion 50, the back end 108 of the cushion 50, or any cross-section between the front end 106 and back end 108 of the cushion 50 may be symmetrical along central axis 114 such that left and right sides of the front end 106 of the cushion 50, the back end 108 of the cushion 50, or any cross-section between the front end 106 and back end 108 of the cushion 50 are mirror images of each other. Alternatively, the cushion 50 may not be symmetrical along central axis 114. For example, one of the spaced-apart protrusions 110 may be smaller than the other of the spaced-apart protrusions 110 in the event asymmetrical side bolsters of either seat bottom 20 or seat back 22 are desired. Phantom line 116 illustrates a scenario where one of the spaced-apart protrusions 110 is shorter or smaller than the other of the spaced-apart protrusions 110 (e.g., one of the spaced-apart protrusions 110 extends a shorter distance away from the centrally positioned region 112 relative to the other of the spaced-apart protrusions 110).

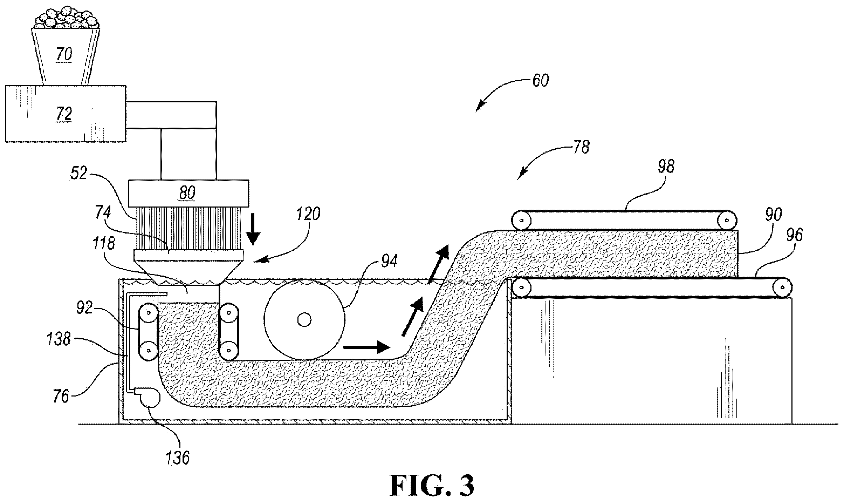

An example of a manufacturing system 60 of making a cushion or filament mesh structure (e.g., cushion 50) is also shown in Figure 3. In this example, the manufacturing system 60 includes a material supply 70, an extruder 72, and a funnel 74. The manufacturing system 60 also includes a fluid or cooling tank 76 and a material handling subsystem 78.

Referring to Figure 3, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72, which may also be referred to as a first tool, melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and each filament 52 contacts and bonds to at least one other filament 52. The funnel 74 has an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a filament mesh structure 90.

The cooling tank 76 holds a coolant or liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid provides some buoyancy or resistance that can result in additional bending, curling, or looping of the filaments 52 adjacent to the surface of the liquid or within the funnel 74 to further build the filament mesh structure 90. The liquid also cools the filaments 52 when the filaments 52 are in the liquid. For instance, the liquid cools the filaments 52 from the outside to solidify the filaments 52 and prevent the filaments from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid and out of the liquid. In some configurations, one or more tractor conveyors 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid. Alternatively or in addition, the filament mesh structure 90 may be squeezed to remove liquid, air may be blown toward the filament mesh structure 90 to help remove liquid, the filament mesh structure 90, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions (e.g., cushions 50). Such processing is conducted by a cutting subsystem of the manufacturing system 60. The cutting system may be of any suitable type. For instance, the cutting system may employ a blade, knife, hot knife, saw, fluid jet, or the like to cut the filaments 52 of the filament mesh structure 90 into a blank. The cutting system may be used to shape or contour the blank. It is also contemplated that a blank may be further shaped or contoured with other manufacturing processes, such as molding of the entire blank or a portion thereof.

The filaments 52 may still be in a partially heated state and therefore a malleable state as the filaments 52 breach the upper surface of the coolant or liquid along the top of the cooling tank 76. Furthermore, over the course of a production day, the coolant or liquid within the cooling tank 76 along the top of the cooling tank 76 may increase in temperature, which results in a decrease in the cooling of the filaments 52 along the top of the cooling tank 76. This could result in compression and deformation of the spaced-apart protrusions 110 that is outside of tolerable dimensions for the spaced-apart protrusions 110 when the filament mesh structure 90 forming the cushion 50 is being pulled downward and into the cooling tank 76 via the one or more tractor conveyors 92. In order to prevent such deformations of the spaced-apart protrusions 110 that is outside of tolerable dimensions, the filaments 52 may be directed from the funnel 74 and into a conduit or extension 118 where the filaments 52 are further cooled prior to engagement between the filament mesh structure 90 and the one or more tractor conveyors 92.

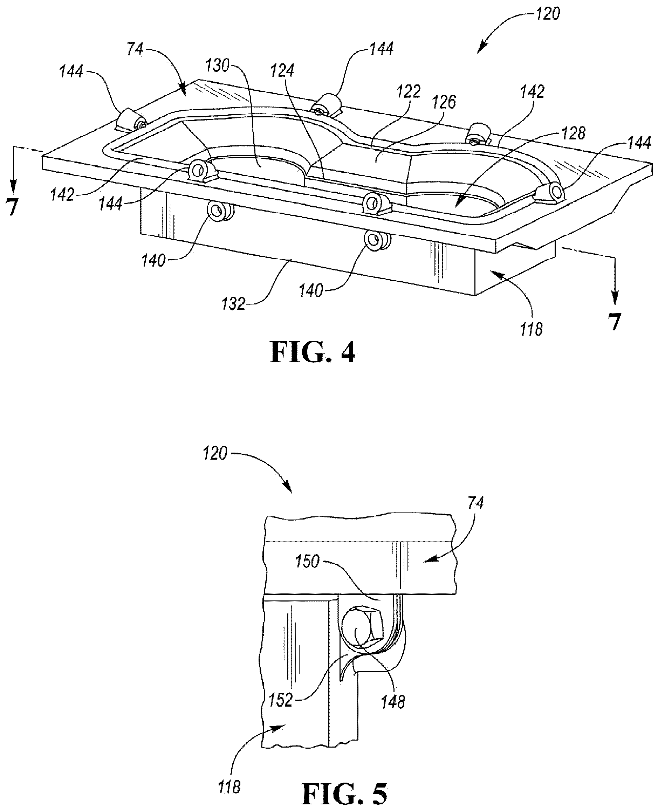

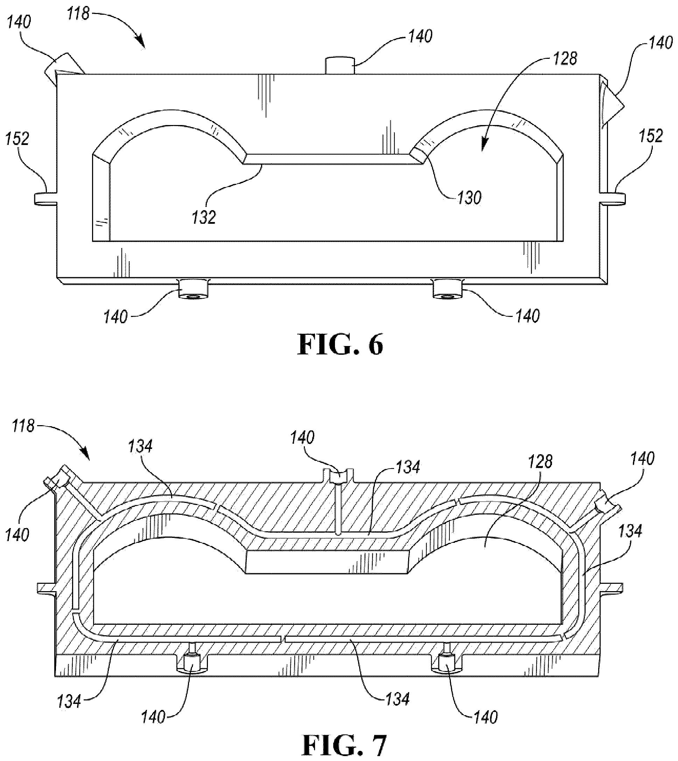

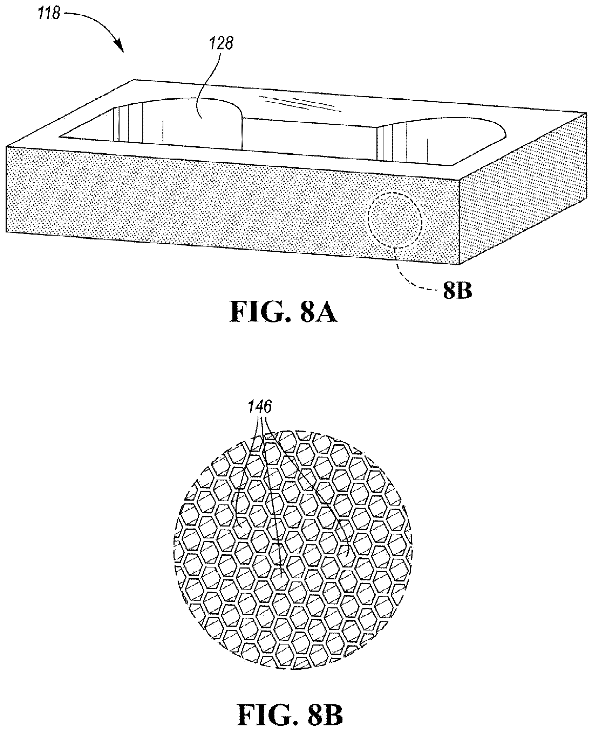

Referring to Figures 3-8B, a tool 120 comprising the funnel 74 and the extension 118 is illustrated in further detail. The funnel 74 defines an opening or inlet 122 along a top of the funnel 74. The inlet 122 is operable to receive a set of the filaments 52. The funnel 74 further defines an opening or outlet 124 along bottom of funnel 74. An aperture or internal cavity 126 extends between the inlet 122 and the outlet 124. The inlet 122 and the outlet 124 comprise the inlet to and the outlet from the internal cavity 126, respectively. The internal cavity 126 is tapered between the between the inlet 122 and the outlet 124, which operates to increase the density of the filaments 52 at the outlet 124 relative to the inlet 122. The outlet 124 is operable to form a product (e.g., the cushion 50) from the set of filaments 52. For example, the outlet 124 may be sized to form the product according to a desired shape and corresponding desired dimensions.

The extension 118 is secured to the funnel 74. The extension 118 defines an internal cavity or aperture 128 sized to correspond with the outlet 124 (e.g., the aperture 128 and the outlet 124 have outer contours or outer peripheries that have the same shape and corresponding dimensions). The aperture 128 may also be aligned with the outlet 124. The aperture 128 routes the formed product (e.g., cushion 50) through the extension 118 from the funnel 74 and into the coolant or liquid within the cooling tank 76.

The extension 118 is operatable to both (i) direct the formed product (e.g., cushion 50) from the outlet 124 of the funnel 74 to the liquid coolant within the cooling tank 76 via the aperture 128 and (ii) cool the formed product prior to directing the formed product into the cooling tank 76. The aperture 128 may maintain the same shape and corresponding dimensions between an inlet side 130 outlet side 132 of the extension 118. Alternatively, the aperture 128 may taper inward (e.g., the cross-sectional area of the aperture 128 may decrease) or taper outward (e.g., the cross-sectional area of the aperture 128 may increase) between the inlet side 130 and the outlet side 132 of the extension 118. Tapering the aperture 128 inward may slightly compress the formed product to prepare the formed product for engagement with the one or more tractor conveyors 92. Tapering the aperture 128 inward allows for a seamless transition from the funnel 74 to the tractor conveyors 92. Tapering the aperture 128 inward also pre-compresses the material (e.g., filaments 52) forming the product (e.g., cushions 50), which is beneficial during startup of the production line. Tapering the aperture 128 outward removes the friction acting between the formed product and the extension 118 prior to the formed product engaging the one or more tractor conveyors 92. Tapering the aperture 128 outward increases liquid or coolant circulation, and therefore cooling, within the cooling tank 76. Tapering the aperture 128 outward also prevents deformation of the shape or contour of the material (e.g., filaments 52) forming the product (e.g., cushions 50).

The extension 118 may extend downward from the funnel 74 and into the coolant or liquid within the cooling tank 76 to facilitate heat exchange from the extension 118 to coolant or liquid within the cooling tank 76, which facilitates cooling of the formed product (e.g., cushion 50) within the extension 118. The coolant or liquid within the cooling tank 76 is operable to further cool the formed product as the formed product exits extension 118, after the formed product exits the extension 118, and while elements of the material handling subsystem 78 (e.g., the one or more tractor conveyors 92 or the roller 94) move the formed product away from the extension 118 and through the cooling tank 76.

The extension 118 may define one or more channels 134 to receive the coolant or liquid from the cooling tank 76 in order to facilitate cooling of the formed product (e.g., cushion 50) within the extension 118. A pump 136 may be configured to direct the coolant or liquid from a region of the cooling tank 76, where the coolant or liquid may be a lower temperature (e.g., the bottom of the cooling tank 76), to the one or more channels 134 in order to increase the cooling of the formed product. Conduits or tubes 138 may connect the pump 136 to the one or more channels 134 at connection points 140 along the extension 118. The various connection points 140 may operate as either inlets or outlets to the one or more channels 134.

The funnel 74 may also define one or more channels 142 to receive the coolant or liquid from the cooling tank 76 to facilitate cooling of the filaments 52 within the funnel 74. The pump 136 may also be configured to direct the coolant or liquid from the region of the cooling tank 76 where the coolant or liquid may be a lower temperature to the one or more channels 142 in order to increase the cooling of the filaments 52. The conduits or tubes 138 may also connect the pump 136 to the one or more channels 142 at connection points 144 along the funnel 74. The various connection points 144 may operate as either inlets or outlets to the one or more channels 142.

The extension 118 may be porous to receive the coolant or liquid from the cooling tank 76 to facilitate cooling of the formed product (e.g., cushion 50) within the extension 118. More specifically, the extension 118 may define pores 146 and the coolant or liquid from the cooling tank 76 may flow into and out of the pores 146 to facilitate cooling of the formed product (e.g., cushion 50) within the extension 118. The pores 146 may be hexagonal in shape as illustrated or may be any desirable shape that enhances flow into and out of the pores 146 to increase heat transfer. For example, the pores 146 may comprise a series of circular holes or vertical slits positioned in key locations that direct circulation of the cooling fluid through the extension 118.

The flow or circulation of coolant or liquid within the cooling tank 76 to the extension 118, funnel 74, or generally throughout the cooling tank 76, whether via to the coolant channels (e.g., the one or more channels 134 or the one or more channels 142) or via to the pores 146 may decrease the temperature of the coolant or liquid and eliminate hot spots within the coolant or liquid along the top of the cooling tank 76 where the formed product (e.g., cushion 50) initially enters the cooling tank 76. This further ensures that the formed product is sufficiently cooled in order to prevent deformation of the formed product when engaging the one or more tractor conveyors 92.

The extension 118 and the funnel 74 may be separate components that are secured to each other. For example, fasteners 148 (e.g., bolt, rivet, screw, etc.) may extend through holes or orifices defined by tabs 150 extending from the funnel 74 and aligned holes or orifices defined by tabs 152 extending from the extension 118 to secure the extension 118 to the funnel 74. If the extension 118 and the funnel 74 are formed as separate components, a gasket or seal may be disposed between an upper surface of the extension and a lower surface of the funnel 74 to prevent the filaments 52 from seeping out from between the extension 118 and funnel 74. Alternatively, the extension 118 and the funnel 74 may be integrally formed as a single component via any know manufacturing process (e.g., additive manufacturing/3D printing, casting, molding, etc.).

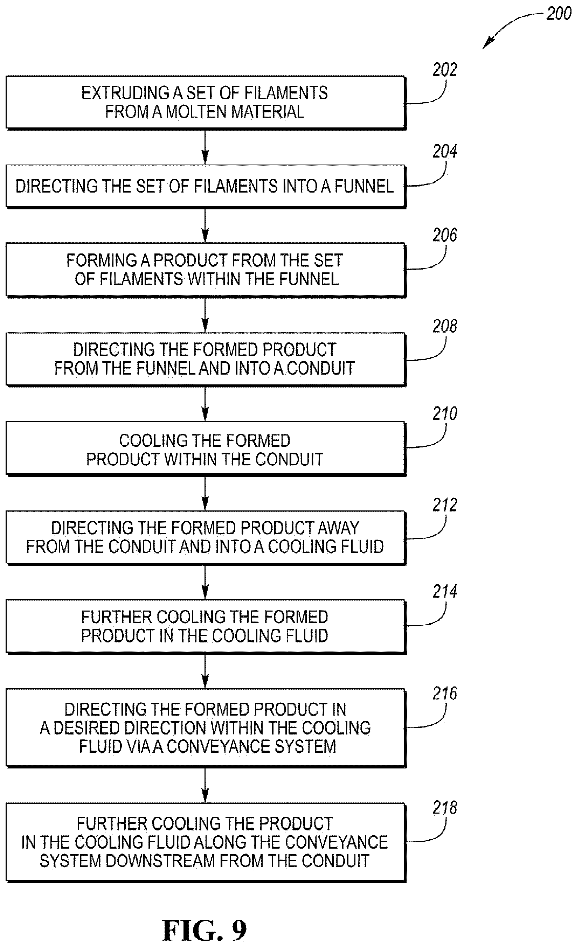

Referring to Figure 9, a method 200 for forming a filament mesh structure or product (e.g., cushion 50) is illustrated. The method 200 begins at block 202 where a set of filaments 52 are extruded from a molten material. The set of filaments 52 are then directed into a funnel (e.g., funnel 74) at block 204. Next, at block 206, a product (e.g., cushion 50) is formed from the set of filaments 52 within the funnel 74. The method 200 next moves on to block 208 where the formed product is directed from the funnel 74 and into a conduit (e.g., extension 118). The formed product is then cooled within the conduit at block 210. The formed product is then directed away from the conduit and into a cooling fluid (e.g., the coolant or liquid within the cooling tank 76) at block 212. The formed product is then further cooled in the cooling fluid at block 214. Next, the formed product is directed in a desired direction within the cooling fluid via a conveyance system (e.g., the one or more tractor conveyors 92 or the roller 94) at block 216. The formed product is then further cooled in the cooling fluid along the conveyance system downstream from the conduit at block 218.

Clause 1. A product comprising: a body comprising (i) a filament mesh structure comprising a set of filaments and (ii) a cross-sectional contour, the cross-sectional contour comprising a first region and a second region, wherein the first region comprises a pair of spaced-apart protrusions extending from a centrally positioned region.

Clause 2. The product of clause 1, wherein the product is a vehicle seat bottom, the vehicle seat bottom further comprises a frame, and wherein the body is secured to the frame such that the pair of spaced-apart protrusions extend away from the frame.

Clause 3. The product of any one of clauses 1 to 2, wherein the centrally positioned region is substantially planar.

Clause 4. The product of any one of clauses 1 to 3, wherein the second region is substantially planar.

Clause 5. The product of any one of clauses 1 to 4, wherein the body is symmetrical along a central axis.

Clause 6. The product of any one of clauses 1 to 4, wherein the body is non-symmetrical along a central axis.

Clause 7. A method comprising: directing a set of filaments into a funnel; forming a product from the set of filaments within the funnel; directing the product from the funnel and into a conduit; cooling the product within the conduit; and directing the product away from the conduit and into a cooling fluid.

Clause 8. The method of clause 7 further comprising further cooling the product in the cooling fluid.

Clause 9. The method of any one of clauses 7 to 8 further comprising directing the product in a desired direction within the cooling fluid via a conveyance system.

Clause 10. The method of any one of clauses 7 to 9 further comprising further cooling the product in the cooling fluid along the conveyance system downstream from the conduit.

Clause 11. The method of any one of clauses 7 to 10 further comprising extruding the set of filaments from a molten material prior to directing the set of filaments into the funnel.

Clause 12. A tool comprising: a funnel defining (i) an inlet operable to receive a set of filaments and (ii) an outlet operable to form a product from the set of filaments; and a conduit (i) secured to the funnel, (ii) defining an aperture sized to correspond with the outlet, and (iii) operable to cool and direct the product from the outlet toward a liquid coolant via the aperture.

Clause 13. The tool of clause 12, wherein the conduit is porous to receive the coolant and facilitate cooling of the product within the conduit.

Clause 14. The tool of any one of clauses 12 to 13, wherein the conduit defines channels to receive the coolant to facilitate cooling of the product within the conduit.

Clause 15. The tool of any one of clauses 12 to 14, wherein the aperture routes the product therethrough.

Clause 16. The tool of any one of clauses 12 to 15, wherein the aperture is tapered.

Clause 17. The tool of any one of clauses 12 to 16, wherein the conduit extends downward from the funnel and into the coolant.

Clause 18. A system comprising the tool of any one of clauses 12 to 17 and further comprising a fluid tank comprising the coolant disposed therein, wherein the coolant is operable to further cool the product exiting the conduit within the tank.

Clause 19. The system of clause 18 further comprising a conveyance system (i) disposed within the fluid tank below the conduit and (ii) operable to direct the product away from the conduit.

Clause 20. The system of any one of clauses 12 to 18 further comprising an extruder to dispense the set of filaments in the funnel.

It should be understood that the designations of first, second, third, fourth, etc. for any component, state, or condition described herein may be rearranged in the claims so that they are in chronological order with respect to the claims. Furthermore, it should be understood that any component, state, or condition described herein that does not have a numerical designation may be given a designation of first, second, third, fourth, etc. in the claims if one or more of the specific component, state, or condition are claimed.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A product comprising:
a body comprising (i) a filament mesh structure comprising a set of filaments and (ii) a cross-sectional contour, the cross-sectional contour comprising a first region and a second region, wherein the first region comprises a pair of spaced-apart protrusions extending from a centrally positioned region.

2. The product of claim 1, wherein the product is a vehicle seat bottom, the vehicle seat bottom further comprises a frame, and wherein the body is secured to the frame such that the pair of spaced-apart protrusions extend away from the frame.

3. The product of any of the preceding claims, wherein the centrally positioned region is substantially planar.

4. The product of any of the preceding claims, wherein the second region is substantially planar.

5. The product of any of the preceding claims, wherein the body is symmetrical along a central axis.

6. The product of any of the preceding claims, wherein the body is non-symmetrical along a central axis.

7. A method comprising:
directing a set of filaments into a funnel;
forming a product from the set of filaments within the funnel;
directing the product from the funnel and into a conduit;
cooling the product within the conduit; and
directing the product away from the conduit and into a cooling fluid.

8. The method of claim 7 further comprising further cooling the product in the cooling fluid.

9. The method of claim 7 or 8, further comprising directing the product in a desired direction within the cooling fluid via a conveyance system,
preferably further comprising further cooling the product in the cooling fluid along the conveyance system downstream from the conduit.

10. The method of any of claims 7 to 9, further comprising extruding the set of filaments from a molten material prior to directing the set of filaments into the funnel.

11. A tool comprising:
a funnel defining (i) an inlet operable to receive a set of filaments and (ii) an outlet operable to form a product from the set of filaments; and
a conduit (i) secured to the funnel, (ii) defining an aperture sized to correspond with the outlet, and (iii) operable to cool and direct the product from the outlet toward a liquid coolant via the aperture.

12. The tool of claim 11, wherein the conduit is porous to receive the liquid coolant and facilitate cooling of the product within the conduit.

13. The tool of claim 11 or 12, wherein the conduit defines channels to receive the liquid coolant to facilitate cooling of the product within the conduit, and/or wherein the conduit extends downward from the funnel and into the liquid coolant.

14. The tool of any of claims 11 to 13, wherein the aperture routes the product therethrough,
and/or wherein the aperture is tapered.

15. A system comprising the tool of any of claims 11 to 14, and further comprising a fluid tank comprising the liquid coolant disposed therein, wherein the liquid coolant is operable to further cool the product exiting the conduit within the fluid tank,
preferably further comprising a conveyance system (i) disposed within the fluid tank below the conduit and (ii) operable to direct the product away from the conduit,
optionally further comprising an extruder to dispense the set of filaments in the funnel.
